Europäisches Patentamt

European Patent Office

Office européen des brevets

(19)

(11) Numéro de publication: **0 392 911**
**A1**

# (12) DEMANDE DE BREVET EUROPEEN

(21) Numéro de dépôt: **90400959.4**

(22) Date de dépôt: **09.04.90**

(51) Int. Cl.⁵: **B60F 5/02, B62K 17/00**

(30) Priorité: **11.04.89 FR 8904747**

(43) Date de publication de la demande:
**17.10.90 Bulletin 90/42**

(84) Etats contractants désignés:
**AT BE CH DE DK ES GB GR IT LI LU NL SE**

(71) Demandeur: **David, Jean-Pierre**
**11 rue de Lancry**
**F-60200 Compiegne(FR)**

Demandeur: **Lechevalier, Guillaume**

**15 rue des Sablons**
**F-60200 Compiegne(FR)**

(72) Inventeur: **David, Jean-Pierre**
**11 rue de Lancry**
**F-60200 Compiègne(FR)**

(74) Mandataire: **Mongrédien, André et al**
**c/o SOCIETE DE PROTECTION DES**
**INVENTIONS 25, rue de Ponthieu**
**F-75008 Paris(FR)**

(54) **Dispositif permettant de transformer une motocyclette en aéronef ultra-léger motorisé.**

(57) Le dispositif comporte une structure en arceau (3) rappelant la forme d'une cage pouvant être fixée sur la motocyclette (1), essentiellement sur son cadre et sur ses flancs ; une voile (5) de parapente montable au sommet de la cage, les bouts de voile pouvant être abaissés par commande à poignées ou à pédales ; un système de propulsion à hélice (8) monté à l'arrière de la motocyclette sur la structure en arceau ; et un mécanisme d'embrayage et de débrayage assurant sur commande l'entraînement soit de la roue motrice, soit de l'hélice.

Une motocyclette ainsi équipée bénéficie d'un grand degré de liberté.

FIG. 1

EP 0 392 911 A1

# DISPOSITIF PERMETTANT DE TRANSFORMER UNE MOTOCYCLETTE EN AERONEF ULTRA-LEGER MOTORISE

La présente invention se rapporte à un dispositif permettant de transformer une motocyclette en aéronef ultra-léger motorisé.

Parmi les aéronefs d'un type assez proche, on connaît en particulier les planeurs ultra-légers motorisés qui sont constitués par l'association d'un tricycle porteur d'une hélice propulsive et d'une aile d'un type spécial de forme généralement rectangulaire, qui est utilisée par les parachutistes de pente ou de plaine, et que l'on appelle communément "aile de parapente".

Un tel tricycle qui est quelquefois pliable, porte une roue avant directrice et deux roues arrière porteuses d'un châssis sur lequel sont montés au moins un siège de passager et le moteur de propulsion de l'hélice.

Ces aéronefs qui fournissent par ailleurs d'excellentes performances, sont souvent l'objet de contraintes qui limitent leur possibilité d'application. En particulier, la partie roulante de ces aéronefs est généralement rudimentaire du fait même qu'elle doit répondre à des impératifs en matière de poids, il s'ensuit qu'elle est fragile et résiste mal en cas de choc, notamment en cas d'atterrissage hors piste.

Le retour du planeur au hangar implique souvent le démontage ou le pliage partiel de ces différents éléments et la nécessité de faire appel à un moyen de transport. Le retour au hangar se fait le plus souvent par remorquage, derrière une voiture, ou par transport sur une galerie.

Dans le brevet US-A-4 657 207 (D. POLING), on décrit un kit permettant de transformer une motocyclette en un véhicule aérien. Ce kit ou adaptateur comporte un système de propulsion à hélice avec des moyens d'attache de ce système directement disposés au-dessus des roues arrière. Une structure ailée est reliée par des suspentes à l'avant et à l'arrière de la motocyclette, des câbles de commande de direction étant reliés à des barres placées sous les ailes du parachute.

Un examen rapide de ce brevet peut faire penser que l'on se trouve en face d'un dispositif analogue à celui de l'invention. Une telle supposition ne résiste toutefois pas à un examen approfondi.

La présente invention a pour but de fournir un dispositif permettant d'équiper des motocyclettes et d'obtenir ainsi un nouvel aéronef qui ne présente pas les inconvénients sus-cités.

Le dispositif selon l'invention comporte :
- une structure en arceau rappelant la forme d'une cage pouvant être fixée sur la motocyclette, essentiellement sur son cadre et sur ses flancs ;

- une voile de parapente montable au sommet de la cage, les bouts de voile pouvant être abaissés par commande à poignées ou à pédales ;
- un système de propulsion à hélice monté à l'arrière de la motocyclette sur la structure en arceau ;
et
- un mécanisme d'embrayage et de débrayage assurant sur commande l'entraînement soit de la roue motrice, soit de l'hélice.

On comprend qu'une telle motocyclette ainsi équipée est tout à fait autonome, puisqu'elle permet de démarrer et d'atterrir à volonté à l'endroit choisi par le pilote et sans faire appel à l'aide d'un autre véhicule pour son remorquage ou son transport. Elle bénéficie donc d'un grand degré de liberté encore jamais atteint par les aéronefs du même type connus jusqu'à présent.

D'autres avantages et caractéristiques de l'invention ressortiront d'ailleurs encore à la lecture de la description de plusieurs modes de réalisation, donnés à titre illustratif et non limitatif de la portée de l'invention, en référence aux dessins annexés, dans lesquels :

- La figure 1 est une représentation schématique en perspective d'une motocyclette équipée d'un dispositif conforme à l'invention, telle qu'elle apparaît en vol.

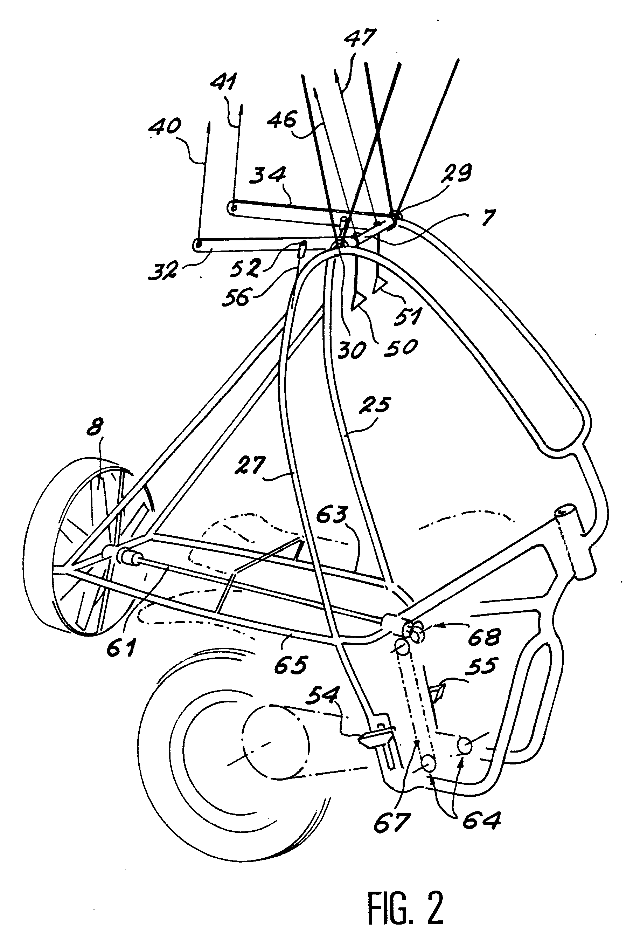

- La figure 2 est une vue en perspective faisant apparaître les détails de la partie centrale de la figure 1.

- La figure 3 est une vue de dessus également schématique de l'ensemble constitué par la motocyclette et le dispositif conforme à l'invention, à l'exclusion de la voile du parapente.

- La figure 4 représente en détail un mécanisme de rappel de la commande de freins.

- La figure 5 représente un exemple d'hélice repliable.

- La figure 6 représente le schéma d'une pédale et de son ressort de rappel.

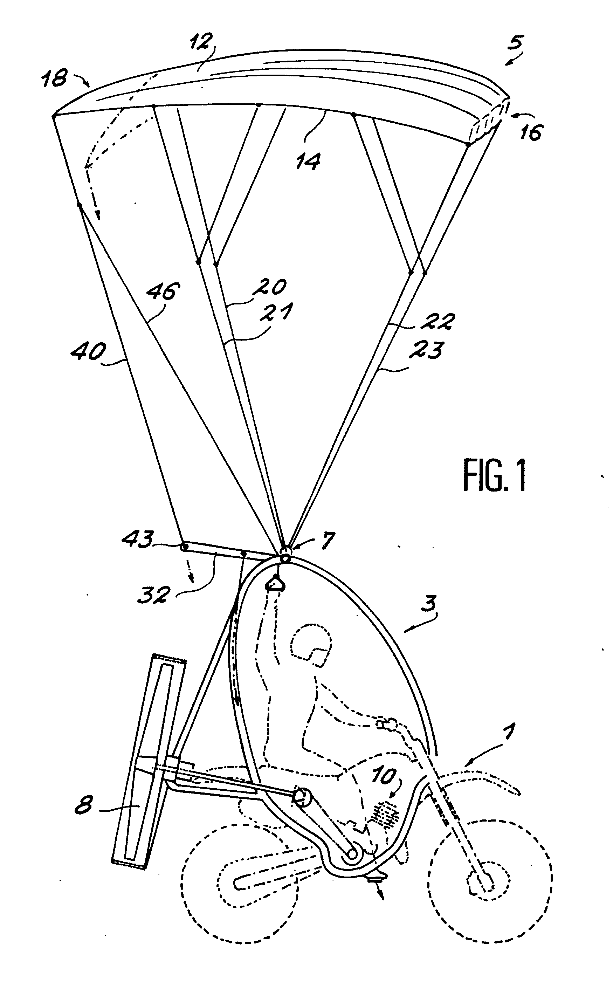

Sur la figure 1, on observe que la motocyclette 1 est équipée d'une structure en arceau 3 rappelant la forme d'une cage destinée à entourer le pilote, et rapportée au cadre de la motocyclette.

Un voile de parapente 5 est fixé sur une traverse 7 au sommet de la cage, alors qu'une hélice de propulsion 8 est montée à la partie arrière de la motocyclette de façon à avoir son arbre de rotation en prise ou non avec l'axe de sortie du moteur 10.

La voile de parapente 5 de type courant est constituée de deux surfaces parallèles : l'intrados 12 sur le dessus et l'extrados 14 sur le dessous qui sont reliés par des membranes verticales définissant des caissons qui sont généralement au nombre de 7, 9, et même 11. Dans le cas présent, on préfère utiliser une voile à 11 caissons pour pouvoir supporter aisément une charge d'environ 200 kg constituée essentiellement par le poids du pilote et l'ensemble formé par la motocyclette et son dispositif.

A la partie avant, on distingue le bord d'attaque 16 par où pénètre l'air entrant dans les caissons au moment du gonflage de la voile, et à la partie arrière le bord de fuite 18.

A partir des membranes verticales ou nervures partent quatre suspentes 20, 21, 22, 23 qui ne sont pas attachées à des sangles appelées "élévateurs", comme dans le cas des parapentes simples, sans moteurs, mais directement à la structure en arceau 3 sur la traverse 7 qui relie entre eux le montant gauche 25 et le montant droit 27 faisant partie de la structure en arceau 3.

Aux deux extrémités 29 et 30 de la traverse 7, sont articulés des leviers de freinage 32, 34 qui sont maintenus en position horizontale par l'action d'un ressort de rappel 36, 37 en appui sur le montant correspondant.

Deux suspentes supplémentaires 40, 41 de chaque côté de la voile relient les bouts d'aile aux extrémités libres 43, 44 des leviers de freinage 32, 34. Deux câbles 46 et 47 porteurs de poignées 50, 51 peuvent être déplacés dans des passages tubulaires ménagés dans la traverse 7. Ces câbles sont fixés aux suspentes 40 et 41 et peuvent être abaissés en tirant sur les poignées 50, 51 vers le bas, ou au contraire remontées sous l'action de la pression de l'air qui s'exerce sur les bouts de voile.

Les suspentes 40 et 41 sont également fixées aux extrémités respectives des leviers de freinage 32, 34. Un câble de freinage 56 qui passe à l'intérieur du montant tubulaire droit 27 est relié à la barre de freinage 32 en un point d'ancrage 52 proche de l'extrémité 30 de la traverse 7. Le câble de freinage 56 est relié à son autre extrémité à une pédale 54 de commande de freinage prévue à la partie inférieure de la structure en arceau. Un câble de freinage identique, non représenté, passe dans le montant gauche 25. Il s'ensuit que les bouts d'aile peuvent être abaissés ou relevés par action sur les poignées 50, 51 ou sur les pédales 54, 55 selon les nécessités du pilotage.

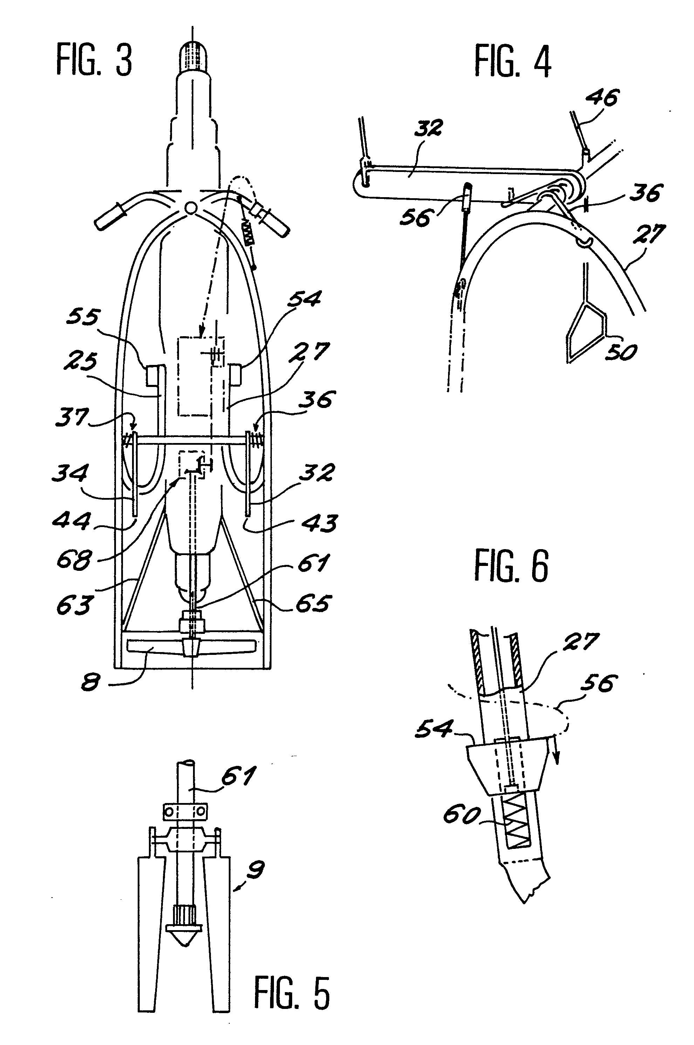

Comme on peut le voir sur la figure 6, la pédale 54 à laquelle est fixé le câble de freinage 56 est solidaire d'un ressort de rappel 60. L'hélice de propulsion 8 qui est montée à l'arrière de la motocyclette est carénée et son carénage n'excède pas en largeur la largeur de la motocyclette, ce qui rend possible d'utiliser la motocyclette sur route sans entraîner la nécessité de démonter l'hélice. Si l'on souhaite utiliser une hélice de plus grand empâtement, on la choisira à pale pliante neuve, comme cela est représenté sur la figure 5 ou on utilisera un carénage repliable ou démontable.

L'arbre de rotation 61 de l'hélice est monté sous le siège de la motocyclette entre deux traverses latérales parallèles 63, 65 faisant partie intégrante de la structure en arceau. Les liaisons entre l'hélice 8 et le moteur 10 s'effectuent au moyen d'un mécanisme 64 du type moyeu débrayable à commande manuelle permettant de débrayer la roue dentée de sortie de boîte de vitesses et d'embrayer la transmission du couple du moteur de la motocyclette à l'hélice 8 par l'intermédiaire d'une chaîne 67 ou d'une courroie crantée, d'un renvoi 68 à pignons coniques à 90°. Un amortisseur de direction maintient la roue avant dans l'axe longitudinal de la motocyclette durant le vol. Une commande de gaz sans retour montée sur le guidon double celle de la motocyclette déjà existante et permet de maintenir les gaz à régime constant durant le vol.

Il est bien entendu que les modes de réalisation décrits ci-dessus n'ont aucun caractère limitatif et que de nombreuses modifications et variations pourront y être apportées sans se départir pour autant ni du cadre, ni de l'esprit de l'invention.

**Revendications**

1. Dispositif permettant de transformer une motocyclette en aéronef ultra-léger motorisé, caractérisé en ce qu'il comporte :
- une structure en arceau (3) rappelant la forme d'une cage pouvant être fixée sur la motocyclette (1), essentiellement sur son cadre et sur ses flancs ;
- une voile (5) de parapente montable au sommet de la cage, les bouts de voile pouvant être abaissés par commande à poignées (50, 51) ou à pédales (54, 55) ;
- un système de propulsion à hélice (8) monté à l'arrière de la motocyclette sur la structure en arceau ; et
- un mécanisme d'embrayage et de débrayage assurant sur commande l'entraînement soit de la roue motrice, soit de l'hélice.

2. Dispositif selon la revendication 1, caractérisé en ce que la structure en arceau (3) comporte à son sommet une traverse (7) séparant deux montants de la structure (25, 27) sur laquelle sont fixées les quatre suspentes (20, 21, 22, 23) de la voile (5) du parapente.

3. Dispositif selon la revendication 1, caractérisé en ce que deux suspentes supplémentaires (40, 41) relient les bouts d'ailes aux extrémités libres (43, 44) de deux leviers de freinage qui sont articulés sur la traverse (7), maintenus en position horizontale par des ressorts de rappel (36, 37), et pouvant être abaissés par l'action de deux câbles (56) reliés chacun à une pédale (54, 55).

4. Dispositif selon la revendication 3, caractérisé en ce que les suspentes supplémentaires (40, 41) en relation avec les bouts d'aile sont reliées à des câbles à poignées (50, 51) pouvant être déplacés dans des passages ménagés dans la traverse (7) pour permettre d'abaisser ou de relever les bouts d'aile.

5. Dispositif selon la revendication 1, caractérisé en ce que l'arbre (61) de l'hélice de propulsion (8) a son extrémité libre équipée d'un pignon conique qui forme un renvoi (68) en coopérant avec un pignon conique entraîné par une chaîne ou une courroie crantée pouvant à volonté être entraînée par l'arbre moteur.

FIG. 1

FIG. 2

EP 0 392 911 A1

# FIG. 3

# FIG. 4

# FIG. 6

# FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | US-A-4657207 (D.POLING)<br>* le document en entier *<br>--- | 1 | B60F5/02<br>B62K17/00 |
| A | FR-A-380815 (C.BIGOT)<br>* le document en entier *<br>--- | 1 | |
| A | FR-A-657742 (V.BIANCHI)<br>* page 4, lignes 66 - 73; figures 1-5 *<br>--- | 1 | |
| A | FR-A-683229 (F.FIEDLER)<br>* le document en entier *<br>--- | 1 | |
| A | DE-A-2357628 (H.LEISTNER)<br>* le document en entier *<br>--- | 1 | |
| A | FR-A-570924 (B.JOHNSON)<br>* le document en entier *<br>--- | 1 | |
| A | US-A-4068810 (D.MALEWICKI)<br>* le document en entier *<br>----- | 1 | |

**DOMAINES TECHNIQUES RECHERCHES (Int. Cl.5 )**

B60F
B62K
B64C

Le présent rapport a été établi pour toutes les revendications

| Lieu de la recherche | Date d'achèvement de la recherche | Examinateur |
|---|---|---|
| LA HAYE | 20 JUILLET 1990 | CZAJKOWSKI A.R. |